Europäisches Patentamt

European Patent Office    (11) Numéro de publication: **0 252 493**

Office européen des brevets    **B1**

(12)    **FASCICULE DE BREVET EUROPEEN**

(45) Date de publication du fascicule du brevet: **16.01.91**    (51) Int. Cl.⁵: **H 02 H 9/06**

(21) Numéro de dépôt: **87109800.0**

(22) Date de dépôt: **07.07.87**

(54) **Dispositif de protection d'une ligne électrique d'énergie contre ses surtensions transitoires élevées.**

(30) Priorité: **11.07.86 FR 8610188**

(43) Date de publication de la demande:
**13.01.88 Bulletin 88/02**

(45) Mention de la délivrance du brevet:
**16.01.91 Bulletin 91/03**

(84) Etats contractants désignés:
**BE CH DE FR GB IT LI NL SE**

(56) Documents cités:
**EP-A-0 205 149**
**DE-A-1 638 061**
**FR-A-2 501 931**
**US-A-3 173 029**

(73) Titulaire: **LES CABLES DE LYON Société anonyme dite:**
**170 quai de Clichy**
**F-92111 Clichy Cedex (FR)**

(72) Inventeur: **Esculpavit, Michel**
**10 Clairières Rouges**
**F-95000 Cergy (FR)**
Inventeur: **Girard, Christian**
**1ter Avenue Foch "Les Pins"**
**F-95220 Herblay (FR)**

(74) Mandataire: **Weinmiller, Jürgen et al**
**Lennéstrasse 9 Postfach 24**
**D-8133 Feldafing (DE)**

Courier Press, Leamington Spa, England.

## Description

La demande de brevet EP—A—0 205 149 (publiée le 17.12.86) concerne un dispositif de protection d'une ligne électrique d'énergie polyphasée contre des surtensions transitoires élevées d'origine électromagnétique, comprenant au moins deux étages en série, dont le premier comporte un éclateur et une inductance de découplage par rapport à l'étage suivant, et se trouve suivi d'un étage à pont écrêteur, qui comprend deux diodes de puissance polarisées en sens contraires reliées chacune en série avec un condensateur de capacité élevée, un contacteur temporisé étant disposé aux bornes de chaque ensemble diode de puissance-condensateur, de façon à permettre la charge des condensateurs à travers une résistance et des diodes auxiliaires, disposées entre le contacteur d'une part et la liaison entre la diode de puissance et le condensateur d'autre part, puis le blocage du pont une fois les condensateurs chargés.

Le dispositif selon cette demande de brevet, s'il assure une protection efficace et limite l'appel de courant à la mise en route, nécessite pour un réseau polyphasé l'emploi sur chaque phase de deux condensateurs de capacité élevée, ainsi que d'une résistance et de deux diodes auxiliaires. Il présente donc une certaine complexité et un certain encombrement.

Le présent perfectionnement a pour but de réduire la complexité, l'encombrement et le coût d'un tel dispositif sur un réseau polyphasé, tout en assurant une protection aussi efficace. Pour cela le pont écrêteur ne comporte qu'un seul couple de condensateurs de capacité élevée, dont chacun est en commun en série avec l'une des didodes de puissance de chaque phase, et éventuellement du neutre, et à chacun desquels est associée une diode auxiliaire.

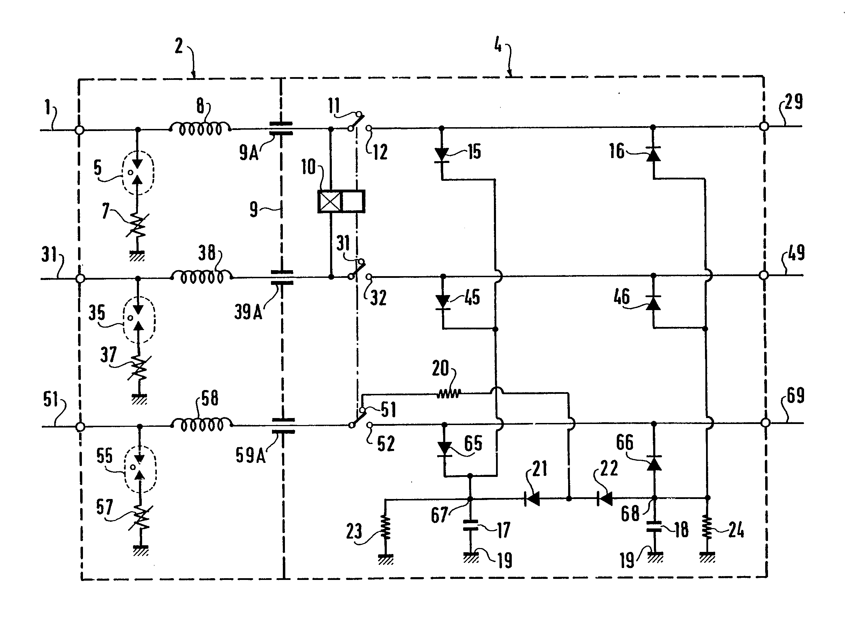

Il est décrit ci-après, à titre d'exemple et en référence à la figure unique du dessin annexé, un dispositif de protection selon le présent perfectionnement d'une ligne électrique d'énergie triphasée, de tension normale 380 volts, de courant permanent compris entre 25 et 700 ampères, contre des perturbations électromagnétiques de toutes natures.

Les conducteurs 1, 31, 51 pénétrent dans un première étage 2 disposé dans un blindage en acier, qui entoure également le second étage 4. Le premier étage comprend des parafoudres de puissance formés par un éclateur (5, 35, 55) et une varistance en série (7, 37, 57) reliée à la terre, cette résistance devant limiter l'intensité évacuée par le parafoudre.

Il comprend en outre des inductances (8, 38, 58) de découplage par rapport au second étage 4. Ces inductances sont de préférence en tôle d'aluminium enroulée, non saturable. Elles sont beaucoup moins volumineuses qu'une inductance classique.

Le premier étage a pour fonction d'absorber de 60 à 80% de l'énergie de l'onde incidents, en écrêtant sa tension à environ 4000 volts, et de bloquer les composantes à haute fréquence.

Le premier étage est relié au second à travers la cloison 9, avec découplage par des capacités (9A, 39A, 59A) de l'ordre du microfarad. Celles-ci éliminent la partie à haute fréquence qui subsisterait dans l'onde incidente.

Le second étage est composé principalement sur chaque phase de ponts d'écrêtage comprenant deux diodes de puissance (15, 16; 45, 46; 65, 66), chacune étant reliée en série à un condensateur (17, 18) de capacité élevé, de l'ordre de 2000 microfarads, relié par son autre borne à la terre (19). Le condensateur 17 est en série avec les diodes 15, 45 et 65, et le condensateur 18 en série avec les diodes 16, 46 et 66.

Les points de contact 67, 68 entre les diodes de puissance et les condensateurs sont reliés par deux diodes auxiliaires 21, 22 disposées en sens contraires. Il est disposé aux bornes de chacun des condensateurs une résistance (23, 24). Ces résistances 23, 24 peuvent permettre de décharger les condensateurs en cas de coupure de réseau.

Le contacteur temporisé 10 comporte une position de charge des condensateurs (bornes 11, 31, 51) par l'intermédiaire d'une résistance 20, et une position de repos (bornes 12, 32, 52).

A la sortie du second étage, des conducteurs 29, 49, 69 relient le dispositif aux appareils à protéger en aval.

Le fonctionnement du second étage, analogue à celui qui a été décrit dans la demande de brevet EP—A—0 205 149 pour un réseau monophasé, est le suivant:

En régime permanent, à la mise sous tension, le commutateur temporisé ferme le circuit passant par la résistance 20 pendant une seconde. On charge lentement les condensateurs 17, 18, par exemple dans la polarité positive pour le condensateur 17 au travers de la résistance 20 et de la diode 21, et dans la polarité négative pour le condensateur 18 au travers de la résistance 20 et de la diode 22. Puis le contacteur assure la commutation de la ligne (passage aux bornes 12, 32, 52).

On évite ainsi un appel de courant initial trop violent du fait des valeurs élevées des capacités des condensateurs. Ceux-ci sont alors chargés à la valeur de la tension de crête du réseau et dans les deux polarités. Les diodes 21, 22 se bloquent et le courant de perte est très faible.

Lorsqu'une surtension arrive sur la ligne sur une ou plusieurs des phases du réseau, elle provoque la conduction d'au moins un couple des diodes de puissance (15, 16; 45, 46 ou 65, 66) et écrête la surtension du fait de la faible impédance des condensateurs vis-à-vis de la fréquence de la perturbation.

Les résistances aux bornes des condensateurs assurent après le passage de la surtension, la charge des condensateurs à la valeur extérieure du réseau. Le contacteur 10 est autoprotégé par le dispositif.

## Revendication

Dispositif de protection d'une ligne électrique d'énergie polyphasée contre des surtensions transitoires élevées d'origine électromagnétique, comprenant au moins deux étages (2, 4) en série, dont le premier (2) comporte un éclateur (5, 35, 55) et une inductance (8, 38, 58) de découplage par rapport à l'étage suivant, et se trouve suivi d'un étage (4) à pont écrêteur, qui comprend deux diodes de puissance polarisées en sens contraires (15, 16; 45, 46; 65, 66) reliées chacune en série avec un condensateur de capacité élevé (17, 18), un contacteur temporisé (10) étant disposé aux bornes de chaque ensemble diode de puissance-condensateur, de façon à permettre la charge des condensateurs à travers une résistance (20) et des diodes auxiliaires (21, 22), disposées entre le contacteur d'une part et la liaison entre la diode de puissance et le condensateur d'autre part, puis le blocage du pont une fois les condensateurs chargés, le pont écrêteur ne comportant qu'un seul couple de condensateurs de capacité élevée (17, 18), dont chacun est en commun en série avec l'une des diodes de puissance de chaque phase, et éventuellement du neutre, et auquel est associée une diode auxiliaire (21, 22).

## Patentanspruch

Einrichtung zum Schutz einer mehrphasigen elektrischen Energieversorgungsleitung gegen hohe kurzzeitige Überspannungen elektromagnetischen Ursprungs, mit mindestens zwei in Reihe geschalteten Stufen (2, 4), von denen die erste (2) eine Funkenstrecke (5, 35, 55) und eine Entkopplungsinduktanz (8, 38, 58) in Bezug auf die nachfolgende Stufe aufweist und an die eine Amplitudenbegrenzerstufe (4) in Brückenschaltung angeschlossen ist, welche zwei gegeneinander gepolte Leistungsdioden (15, 16; 45, 46; 65, 66) besitzt, die jeweils mit einem Kondensator (17, 18) hoher Kapazität in Reihe geschaltet sind, wobei ein Zeitverzögerungs-Schütz (10) an die Klemmen jedes Leistungsdioden-Kondensatorpaars angeschlossen ist, das zunächst das Laden der Kondensatoren über einen Widerstand (20) und über Hilfsdioden (21, 22) erlaubt, welche zwischen dem Schütz einerseits und der Verbindung zwischen der Leistungsdiode und dem Kondensator andererseits angeordnet sind, und das dann das Blockieren der Brücke nach dem Laden der Kondensatoren erlaubt, wobei die Amplitudenbegrenzerbrücke nur ein einziges Paar von Kondensatoren (17, 18) hoher Kapazität aufweist, die je mit einer Leistungsdiode jeder Phase und ggfs. des Nulleitens in Reihe geschaltet und einer Hilfsdiode (21, 22) zugeordnet sind.

## Claim

A device for protecting a polyphase electric power line against high transient overvoltages of electromagnetic origin, comprising at least two series-connected stages (2, 4), the first stage (2) being provided with a spark-gap (5, 35, 55) and an inductance (8, 38, 58) intended to discouple this stage from, the following stage and being followed by a stage (4) having a bridge-type amplitude limiter including two oppositely-biased power diodes (15, 16; 45, 46; 65, 66) each connected in series with a high-value capacitor (17, 18), a time-delay contactor (10) being placed at the terminals of each power diode/capacitor assembly so as to permit charging of the capacitors through a resistor (20) and through auxiliary diodes (21, 22) placed between on the one hand the contactor and on the other hand the connection point between the power diode and the capacitor, then to permit blocking of the bridge limiter once the capacitors have been charged, the bridge-type limiter having only one pair of high-value capacitors (17, 18), each connected in common in series with one of the power diodes of each phase and of the neutral when required, an auxiliary diode (21, 22) being associated with each capacitor.

EP 0 252 493 B1